Europäisches Patentamt

European Patent Office

Office européen des brevets

(19)

(11) Veröffentlichungsnummer: **0 003 600**
**B1**

(12) **EUROPÄISCHE PATENTSCHRIFT**

(45) Veröffentlichungstag der Patentschrift: **17.06.81**

(51) Int. Cl.³: **H 04 N 5/33**

(21) Anmeldenummer: **79100368.4**

(22) Anmeldetag: **09.02.79**

(54) **Verfahren und Vorrichtung zur Erzeugung eines Bildes einer Szene, insbesondere eines Wärmebildes, mit Kompensation des Phasenfehlers.**

(30) Priorität: **10.02.78 DE 2805531**

(43) Veröffentlichungstag der Anmeldung:
**22.08.79 Patentblatt 79/17**

(45) Bekanntmachung des Hinweises auf die Patenterteilung:
**17.06.81 Patentblatt 81/24**

(84) Benannte Vertragsstaaten:
**CH FR GB NL SE**

(56) Entgegenhaltungen:
**US - A - 3 708 666**

(73) Patentinhaber: **Firma Carl Zeiss**
**Postfach 1369/1380**
**D-7082 Oberkochen (DE)**

(72) Erfinder: **Kürbitz, Gunther, Dr.**
**Staufferstrasse 2**
**D-7080 Aalen-Ebnat (DE)**
Erfinder: **Wegener, Walter**
**Rosensteinstrasse 12**
**D-7923 Königsbronn (DE)**

## Verfahren und Vorrichtung zur Erzeugung eines Bildes einen Szene, insbesondere eines Wärmebildes, mit Kompensation des Phasenfehlers

Die Erfindung betrifft ein Verfahren zur Erzeugung eines Bildes einer Szene, insbesondere eines Wärmebildes, wobei die zu beobachtende Szene optisch abgebildet, durch eine mechanisch hin und her bewegte Abtastvorrichtung (Scanner) zeilenweise zerlegt und über einen Vielelement-Reihendetektor geführt wird, dessen Elemente in einer zur Abtastrichtung des Scanners senkrechten Reihe angeordnet sind und wobei die Signale des Detektors über einen Verstärker einer Bilddarstellungsvorrichtung zugeführt werden. Außer dem Verfahren betrifft die Erfindung auch eine Vorrichtung zur Durchführung des Verfahrens.

Bei bekannten Vorrichtungen zur Erzeugung von Wärmebildern, die beispielsweise aus der US—PS 37 42 238 hervorgehen, sind mehrere rechteckige Detektorelemente auf einem Einkristall in einer Reihe aufeinanderfolgend und mit Abstand zueinander angeordnet, wobei ihr Abstand zueinander ihrer Seitenlänge entspricht und ihre Mitellinien in Richtung der Reihe zusammenfallen. Durch einen derartigen Reihendetektor wird die Bildzerlegung in einer Dimension durchgeführt. Die Bildzerlegung in der zur Detektorreihe senkrechten Richtung wird in der Regel durch eine mechanisch bewegte Abtastvorrichtung, einen sog. Scanner, vorgenommen. Die Abtastvorrichtung führt die beobachtete Szene in der zur Detektorreihe senkrechten Richtung über den Detektor. Sie kann aus hin- und herschwingenden Elementen bestehen, die während ihres Hinund Rücklaufs für die Abtastung ausgenutzt werden. Es ist bekannt, als Scanner einen Schwingspiegel zu verwenden, der das Bild der Szene über die Detektorreihe führt. Ein derartiger Schwingspiegel ist beispielsweise im DE—GM 72 17 873 beschrieben. Durch eine kleine Kippung des Spiegels in Richtung der Detektorreihe jeweils in den Endpunkten der Hauptabtastbewegung wird erreicht, daß die Szenenpunkte, die zum Beispiel beim Spiegelhinlauf auf die Detektorzwischenräume abgebildet werden, beim Spiegelrücklauf auf die Detektorelemente abgebildet werden. Die Bilddarstellungseinrichtung besteht bei bekannten Vorrichtungen aus einer Leuchtdiodenreihe, die ähnlich wie der Detektor aufgebaut ist. Sie wird zum Beispiel mit Hilfe eines Okulars direkt betrachtet oder mit Hilfe eines Objektives auf die Kathode eines opto-elektronischen Wandlers abgebildet, wobei der Strahlengang jeweils über den gleichen Schwingspiegel, der die Szenenabtastung vornimmt, geführt wird. Häufig wird bei der Abtastung des Detektors die Vorderseite des Schwingspiegels und bei der Wiedergabe die Rückseite des Schwingspiegels verwendet.

Bei den bekannten Verfahren und Vorrichtungen zur Erzeugung von Wärmebildern haben Detektor, Verstärker und Leuchtdioden nur eine begrenzte elektrische Bandbreite. Zur Verbesserung des Signal-Rauschverhältnisses wird die technisch bedingte Bandbreite des Verstärkers meist zusätzlich begrenzt. Dadurch tritt eine Tiefpaßfilterwirkung in der Bildübertragung auf. Als Folge davon werden Signalsprünge, die von Objekten mit scharfen Kanten erzeugt werden, mit endlicher Anstiegsgeschwindigkeit übertragen. Es entsteht ein Phasenfehler, durch den zum Beispiel die Schwerpunkte dünner Strukturen der Szene im Bild zeitlich verzögert, d.h. bei einer beispielsweise von links nach rechts verlaufenden Abtastrichtung der Zeilen nach rechts versetzt wiedergegeben werden. Wird die Abtasteinrichtung im Hin- und Rücklauf benutzt, so bewirkt der Phasenfehler beim Rücklauf einen Versatz nach links. Lineare Strukturen der Szene, die senkrecht zur Abtasteinrichtung stehen, werden daher mäanderartig wiedergegeben werden. Dadurch wird das Auflösevermögen des Gerätes vermindert.

Der Erfindung liegt deshalb die Aufgabe zugrunde, ein Verfahren und eine Vorrichtung zur Kompensation des letzt genannten Phasenfehlers anzugeben.

Diese Aufgabe wird erfindungsgemäß dadurch gelöst, daß zur Kompensation des bei der übertragung von Signalsprüngen auftretenden Phasenfehlers die von der Reihe der Einzelelemente auf der Detektorvorrichtung kommenden Signale auf zwei benachbarte Reihen von Leuchtdioden einer Bildwiedergabeanordnung so aufgeschaltet werden, daß beim Spiegelhinlauf die Elemente der einen Reihe und beim Spiegelrücklauf die Elemente der anderen Reihe angesteuert werden und daß der Abstand zwischen den in Richtung der Reihe verlaufenden Mittelachsen der Elemente der beiden Reihen entsprechend dem zu kompensierenden Phasenfehler eingestellt wird.

Eine gleichartige Kompensation des Phasenfehlers wird erreicht, wenn die von der Reihe der Einzelelemente auf der Detektorvorrichtung kommenden Signale auf zwei räumlich voneinander getrennt auf zwei verschiedenen Trägern angeordnete Reihen von Leuchtdioden so aufgeschaltet werden, daß beim Spiegelhinlauf die Elemente einer Reihe und beim Spiegelrücklauf die Elemente der anderen Reihe angesteuert werden, daß die Leuchtdiodenreihe abgebildet und durch optische Mittel zu zwei benachbarten, auf einem, gemeinsamen Träger erscheinenden Reihen überlagert werden und daß der Abstand zwischen den Mittelachsen der Elemente der beiden Reihen entsprechend dem zu kompensatierenden Phasenfehler eingestellt wird.

Zur Durchführung des Verfahrens wird erfindungsgemäß eine Vorrichtung angegeben, die aus einem Schwingsspiegel, einem Detektor mit einer Reihe von zueinander mit Abstand angeordneten Detektorelementen und aus einem Verstärker mit Tiefpaßfilter besteht und die sich dadurch auszeichnet, daß die Bilddarstellungsanordnung der Übertragungskette aus zwei benachbarten, auf einem gemeinsamen Träger aufgebrachten Reihen von Leuchtdioden besteht, deren Einzelelemente bei Betrachtung über den Schwingspiegel scheinbar auf Lücke zu den Elementen der benachbarten Reihe stehen, wobei der Abstand zwischen den Mittelachsen der Einzelelemente der beiden Leuchtdiodenreihen entsprechend dem zu kompensierenden Phasenfehler einstellbar ist und daß ein elektronischer Schalter (Demultiplexer) zwischen dem Verstärker und der Bilddarstellungseinrichtung vorgesehen ist.

Wenn die Signale des Detektors auf zwei räumlich voneinander getrennt angeordnete Leuchtdioden-Reihen geschaltet werden, ist es zweckmäßig, daß zur Bilddarstellungseinrichtung optische Mittel zur Abbildung und Überlagerung der auf getrennten Trägern aufgebrachten Leuchtdiodenreihen zu zwei benachbarten, auf einem gemeinsamen Träger erscheinenden Reihen vorgesehen sind und daß ein elektronischer Schalter (Demultiplexer) für die alternierende Ansteuerung der Leuchtdiodenreihen zwischen Verstärker und Bildwiedergabeeinrichtung vorgesehen ist.

Der elektronische Schalter sorgt dafür, daß beim Spiegelhinlauf die Elemente der einen der beiden Leuchtdiodenreihen und beim Spiegelrücklauf die Elemente der anderen Leuchtdiodenreihe angesteuert werden.

Zur optischen Überlagerung der beiden räumlich getrennt angeordneten Leuchtdiodenreihen empfehlen sich bekannte Mittel der physikalischen oder geometrischen Stralenteilung.

Das erfindungsgemäße Verfahren und Beispiele erfindungsgemäßer Vorrichtungen zur Durchführung des Verfahrens werden in der Zeichnung weiter erläutert und näher beschrieben. Es zeigt

Figur 1 einen Flußplan für die Abläufe der einzelnen Verfahrensschritte in der Bild-Übertragungskette für ein Ausführungsbeispiel der Erfindung,

Figur 2 einen Flußplan für die Abläufe der einzelnen Verfahrensschritte der Bildübertragungskette für ein weiteres Ausführungsbeispiel der Erfindung,

Figur 3 die Darstellung der Anordnung einer Reihe von Detektorelementen auf dem Glied "Detektor" der Übertragungskette,

Figur 4 die Darstellung eines Phasensprunges infolge Tiefpaßfilterwirkung der Übertragungskette bei Verwendung des Gliedes "mechanischer Abtaster" im Hinlauf,

Figur 5 Darstellung des Phasenfehlers einer Linearen, senkrecht zur Abtastrichtung stehenden Struktur der Szene bei Verwendung der mechanischen Abtastvorrichtung im Hin- und Rücklauf,

Figur 6a und 6b Darstellung der Erscheinung zweier Reihen von Leuchtdioden auf einer Bilddarstellungseinrichtung bei der Betrachtung über den Schwingspiegel,

Figur 7 Ausschnittsweise Darstellung der erfindungsgemäßen Anordnung zweier auf getrennten Trägern angeordneten Reihen von Leuchtdioden, die mit einem teildurchlässigen Spiegel optisch vereinigt werden,

Figur 8 Darstellung eines Beispiels für die optisch auf einem Träger vereinigten Bilder von nach Figur 7 auf getrennten Trägern angeordneten Leuchtdiodenreihen bei Betrachtung über den Schwingspiegel.

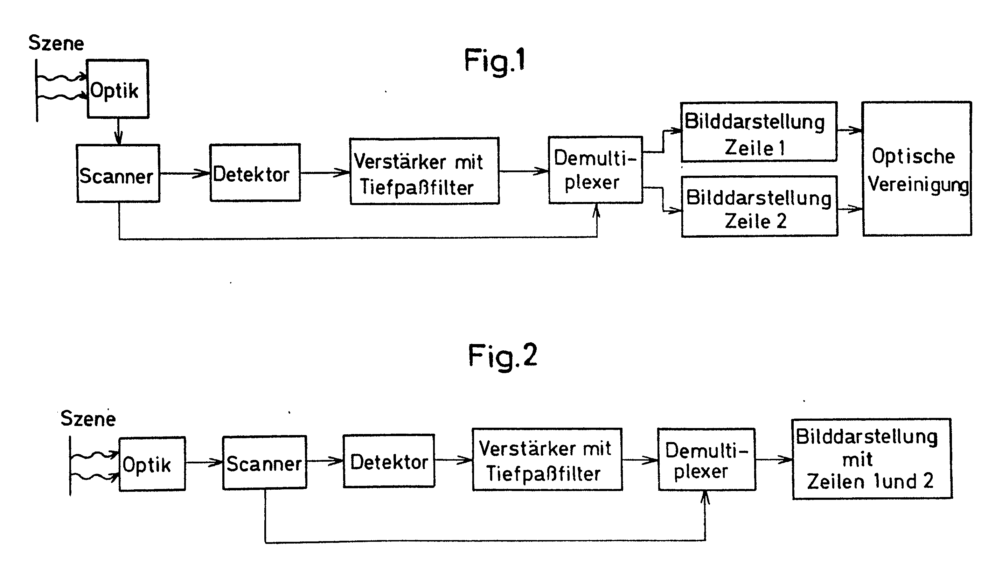

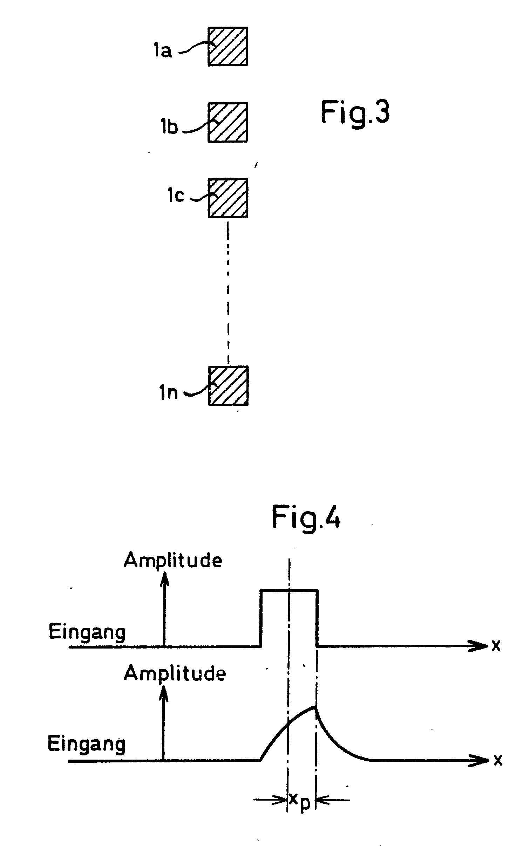

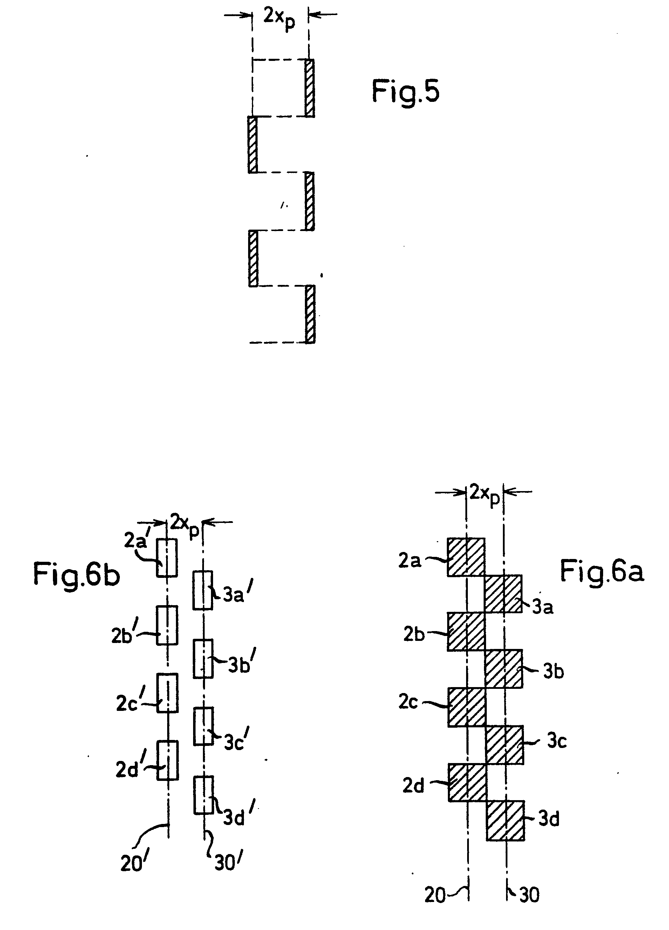

In dem in Figur 1 dargestellten Flußplan für das Verfahren zur Bildübertragung sind die einzelnen Glieder der Übertragungskette beschriftet. Von der zu beobachtenden Szene trifft die ausgehende Strahlung auf die Abbildungsoptik und wird von ihr auf den Detektor abgebildet. Dieser führt die Bildzerlegung in Richtung der auf ihm nach Figur 3 angeordneten Reihe von Einzeldetektoren 1a—1n durch. Die Bildzerlegung in der zur Richtung der Detektorreihe senkrechten Richtung wird durch eine als Scanner bezeichnete mechanisch bewegte Abtastvorrichtung vorgenommen, die zwischen Abbildungsoptik und Detektor geschaltet ist und die Szene über den Detektor führt. Beim Auftreffen von Strahlung auf die Detektorelemente entstehen Signale, die von Verstärkern einzeln verstärkt und der Bilddarstellungseinrichtung zugeführt werden. Diese besteht erfindungsgemäß zur Kompensation des bei der Übertragung von Signalsprüngen auftretenden Phasenfehlers aus zwei nach Figur 6a oder 6b scheinbar angeordneten Leuchtdiodenreihen. In Figur 4 ist dargestellt, wie durch den Phasenfehler die Schwerpunkte dünner Strukturen der Szene im Bild zeitlich verzögert, d.h. in der Abtastrichtung versetzt, wiedergegeben werden. Der Betrag der Versetzung ist in der Figur 4 mit $x_p$ bezeichnet. Wird die Abtastvorrichtung im Hin- und Rücklauf benutzt, so bewirkt der Phasenfehler, daß Strukturen der Szene, die senkrecht zur Abtastrichtung stehen, mäanderförmig im Abstand $2x_p$ wiedergegeben werden, wie in Figur 5 dargestellt.

In den Figuren 6a und 6b ist die bei Betrachtung über den Scanner erscheinende Anordnung zweier Vertikalreihen von Leuchtdioden auf einem Träger einer Bilddarstellungeinrichtung wiedergegeben. Die Leuchtdioden eines Trägers sind mit 2a—2d und 3a—3d bzw. 2'a—2'd und 3'a—3'd bezeichnet. In den Beispielen der Figur 6a und 6b sind sie quadratisch und rechteckig ausgeführt und so angeordnet, daß die Mittellinien 20, 30 bzw. 20', 30' der zusammengehörenden Reihen um den Betrag $2x_p$ voneinander entfernt sind. Die Erfindung ist jedoch nicht auf quadratisch oder rechteckig ausgeführte Diodenelemente beschränkt, vielmehr können diese beliebige, beispielsweise herstellungsbedingte Umrisse haben und so angeordnet sein, daß die Elemente einer Reihe scheinbar in die Zwischenräume der anderen Reihe fallen oder diese scheinbar überlappen.

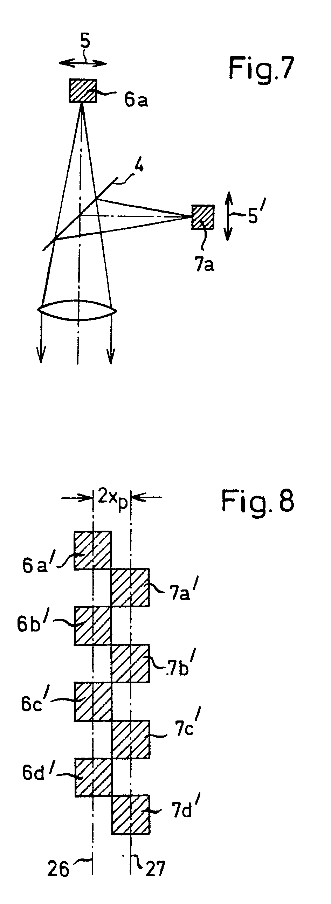

In der Figur 7 ist die optische Vereinigung der Bilder zweier Einzelelemente 6a und 7a von je einer Leuchtdiodenreihe gezeigt. Die beiden Reihen sind getrennt voneinander, beispielsweise auf je einem Einkristall aufgebracht.

Durch die optische Vereinigung der Bilder 6a' und 7a' über den Scanner mit Mitteln der physikalischen Strahlenteilung — im gezeigten Beispiel einem teildurchlässigen Spiegel 4 — fallen die bilder der Elemente der einen Reihe in die Zwischenräume der Elemente der anderen Reihe. Es entsteht das in Figur 8 dargestellte Bild von zwei auf Lücke versetzt zueinander angeordneten Reihen von Leuchtdioden, 6a'—6d' und 7a'—7d'. Die Doppelpfeile 5 und 5' stehen für ein Schiebeelement, das zum Justieren des Abstandes $2x_p$ durch Verschieben einer oder beider Leuchtdiodenreihen dient.

## Patentansprüche

1. Verfahren zur Erzeugung eines Bildes einer Szene, insbesondere eines Wärmebildes, wobei die zu beobachtende Szene optisch abgebildet, durch eine mechanisch hin und her bewegte Abtastvorrichtung (Scanner) zeilenweise zerlegt und über einen Vielelement-Reihendetektor geführt wird, dessen Elemente (1a—1n) in einer zur Abtastrichtung des Scanners senkrechten Reihe angeordnet sind und wobei die Signale des Detektors über einen Verstärker einer Bilddarstellungsvorrichtung zugeführt werden, dadurch gekennzeichnet, daß zur Kompensation des bei der Übertragung von Signalsprüngen auftretenden Phasenfehlers $(x_p)$ die von der Reihe der Einzelelemente (1a—1n) der Detektorvorrichtung kommenden Signale auf zwei benachbarte Reihen von Leuchtdioden (2a—2n, 3a—3n) einer Bildwiedergabeanordnung so aufgeschaltet werden, daß beim Spiegelhinlauf die Elemente der einen Reihe (2a—2n) und beim Spiegelrücklauf die Elemente der anderen Reihe (3a—3n) angesteuert werden und daß der Abstand zwischen den in Richtung der Reihe verlaufenden Mittelachsen 20, 30) der Elemente der beiden Reihen (2a—2n, 3a—3n) entsprechend dem zu kompensierenden Phasenfehler eingestellt wird.

2. Verfahren zur Erzeugung eines Bildes einer Szene nach Oberbegriff des Anspruchs 1, dadurch gekennzeichnet, daß die von der Reihe der Einzelelemente (1a—1n) der Detektorvorrichtung kommenden Signale auf zwei räumlich von einander getrennt auf zwei verschiedenen Trägern angeordnete Reihen von Leuchtdioden (6a—6n und 7a—7n) so aufgeschaltet werden, daß beim Spiegelhinlauf die Elemente einer Reihe und beim Spiegelrücklauf die Elemente der anderen Reihe angesteuert werden, daß die Leuchtdiodenreihen abgebildet und durch optische Mittel zu zwei benachbarten auf einem gemeinsamen Träger erscheinenden Reihen (6a'—6d' und 7a'—7d') überlagert werden und daß der Abstand $(2x_p)$ zwischen den Mittelachsen (26, 27) der Elemente der beiden Reihen entsprechend dem zu kompensierenden Phasenfehler eingestellt wird.

3. Vorrichtung zur Durchführung des Verfahrens nach Anspruch 1, deren Übertragungskette aus einem Schwingspiegel, einem Detektor mit einer Reihe von zueinander mit Abstand angeordneten Detektorelementen und aus einem Verstärker mit Tiefpaßfilter besteht, dadurch gekennzeichnet, daß die Bilddarstellungsanordnung der Übertragungskette aus zwei benachbarten, auf einem gemeinsamen Träger aufgebrachten Reihen von Leuchtdioden (2a—2d, 3a—3d oder 2a'—2d', 3a'—3d') besteht, deren Einzelelemente auf Lücke zu den Elementen der benachbarten Reihe angeordnet erscheinen, wobei der Abstand $(2x_n)$ zwischen den Mittelachsen (20, 30 und 20', 30') der Einzelelemente der jeweils zusammengehörenden beiden Reihen entsprechend dem zu kompensierenden Phasenfehler einstellbar ist und daß ein elektronischer Schalter (Demultiplexer) zwischen dem Verstärker und der Bildwiedergabeeinrichtung vorgesehen ist.

4. Vorrichtung nach Anspruch 3 zur Durchführung des Verfahrens nach Anspruch 2, dadurch gekennzeichnet, daß für die Bilddarstellungsvorrichtung zwei räumlich voneinander getrennt angeordnete Reihen von Leuchtdioden (6a—6n, 7a—7n) auf Bildwiedergabeanordnungen vorgesehen sind und daß optische Mittel zur Abbildung und Überlagerung (4) der zwei Leuchtdiodenreihen zu zwei benachbarten Reihen (6a'—6d', 7a'—7d') vorgesehen sind.

5. Vorrichtung nach Anspruch 4, dadurch gekennzeichnet, daß zur Überlagerung der Leuchtdiodenreihen Mittel der physikalischen Strahlenteilung vorgesehen sind.

6. Vorrichtung nach Anspruch 4, dadurch gekennzeichnet, daß zur Überlagerung der Leuchtdiodenreihen Mittel zur geometrischen Strahlenteilung vorgesehen sind.

## Revendications

1. Procédé de formation d'une image d'une scène, particulièrement d'une image thermique, selon lequel la scène à observer est formée optiquement, est analysée ligne par ligne par un analyseur à mouvement mécanique dans un sens et dans l'autre, et est projetée sur une rangée d'un détecteur à éléments multiples, dont les éléments (1a—1n) sont disposés en une rangée perpendiculaire à la direction de balayage de l'analyseur, et selon lequel les signaux des détecteurs sont appliqués à un dispositif de visualisation par l'intermédiaire d'un amplificateur, procédé caractérisé en ce que, pour compenser l'erreur de phase $(x_p)$ résultant de la transmission des transitions du signal, les signaux provenant de la rangée des éléments individuels (1a—1n) du détecteur sont appliqués à deux rangées voisines de diodes électroluminescentes (2a—2n, 3a—3n) d'un dispositif de reproduction d'image, de manière que pendant le trajet aller du miroir les éléments d'une rangée (2a—2n) soient sélectionnés tandis que pendant le trajet de retour du miroir, les éléments de l'autre rangée (3a—3n) sont sélectionnés, et de manière que la distance entre les axes (20, 30) des éléments des deux rangées (2a—2n, 3a—3n), dans la direction des rangées, corresponde à l'erreur de phase à compenser.

2. Procédé selon la revendication 1, caractérisé en ce que les signaux provenant de la rangée des éléments individuels (1a—1n) du détecteur sont appliqués à deux rangées de diodes électroluminescentes (6a—6n; 7a—7n) disposées sur des supports différents et séparés l'un de l'autre dans l'espace de manière que pendant le trajet d'aller du miroir, les éléments d'une rangée soient sélectionnés; tandis que pendant le trajet de retour du miroir, les éléments de l'autre rangée soient sélectionnés, les rangées de diodes électroluminescentes étant agencées de manière qu'au moyen d'un dispositif optique, les rangées (6a'—6d'; 7a'—7d') soient superposées et apparaissent comme deux rangées voisines sur un support commun, la distance $(2x_p)$ entre les axes (26, 27) des éléments des deux rangées correspondant à l'erreur de phase à compenser.

3. Dispositif destiné à la mise en oeuvre du procédé selon la revendication 1, dont la chaîne de transmission comporte un miroir oscillant, un détecteur avec une rangée d'éléments détecteurs espacés les uns des autres et un amplificateur avec un filtre passe-bas, dispositif caractérisé en ce que le dispositif de visualisation de la chaîne de transmission est constitué par deux rangées voisines de diodes électroluminescentes (2a—2d, 3a—3d; 2a'—2d', 3a'—3d') disposées sur un support commun, dont les éléments individuels apparaissent dans les intervalles entre les éléments de la rangée voisine, la distance $(2 \times_p)$ entre les axes (20, 30; 20', 30') des éléments individuels des deux rangées associées correspondant à l'erreur de phase à compenser, et un commutateur électronique (démultiplexeur) étant prévu entre l'amplificateur et le dispositif de reproduction d'images.

4. Dispositif selon la revendication 3, et destiné à la mise en oeuvre du procédé selon la revendication 2, caractérisé en ce que le dispositif de visualisation est constitué par deux rangées séparées l'une de l'autre dans l'espace, de diodes électroluminescentes (6a—6n; 7a—7n) du dispositif de reproduction d'images, un dispositif optique (4) étant prévu pour reproduire et superposer lesdeux rangées de diodes électroluminescentes sous forme de deux rangées voisines (6a'—6d'; 7a'—7d').

5. Dispositif selon la revendication 4, caractérisé en ce que la superposition des rangées de diodes électroluminescentes est effectuée par un dispositif de séparation physique de rayonnement.

6. Dispositif selon la revendication 4,
caractérisé en ce que la superposition des rangées de diodes électroluminescentes est effectuée par un dispositif de séparation géométrique du rayonnement.

## Claims

1. A process of producing an image of a scene, especially a heat image, in which the scene to be observed is imaged optically, is analyzed linewise by a scanning device which is mechanically moved to and for, and is conducted over a multi-element row detector, whose elements (1a—1n) are arranged in a row perpendicular to the scanning direction of said scanner, the signals of the detector being fed via an amplifier to an image reproduction device, characterized in that for compensating the phase error $(X_p)$ which occurs upon the transmission of signal jumps, the signals coming from the row of the individual elements (1a—1n) of the detector device are connected to two adjacent rows of light-emitting diodes (2a—2n, 3a—3n) of an image reproduction system in such a manner, that upon the forward travel of the mirror, the elements of the one row (2a—2n) and upon the rearward movement of the mirror the elements of the other row (3a—3n) are activated, and that the distance between the center lines (20, 30), extending in the row-wise direction, of the elements of said two rows (2a—2n, 3a—3n) is adjusted in accordance with the phase error to be compensated for.

2. A process of producing an image of a scene in accordance with the definition of the species of claim 1, characterized in that the signals coming from the row of individual elements (1a—1n) of the detector device are fed to two rows of light emitting diodes (6a—6n and 7a—7n) arranged separated in space from each other on two different supports in such a manner, that upon the forward movement of the mirror the elements of one row are activated and upon the return travel of the mirror the elements of the other row are activated, that said rows of light-emitting diodes are imaged and are superimposed by optical means to form two adjacent rows (6a'—6d' and 7a'—7d') appearing on a common support, and that the distance $(2X_p)$ between the center lines (26, 27) of the elements of said two rows is adjusted in accordance with the phase error to be compensated for.

3. Apparatus for carrying out the process according to claim 1, said apparatus comprising an oscillating mirror, a detector having a row of detector elements arranged spaced apart from each other, and an amplifier with a low-pass filter, characterized in that the image reproduction device of said apparatus consists of two adjacent rows of light-emitting diodes (2a—2d, 3a—3d or 2a'—2d', 3a'—3d') arranged on a common support, the individual elements of which appear to be arranged within the gaps between the elements of the adjacent row, the distance $(2X_p)$ between the center linses (20, 30 and 20', 30') of the individual elements of the corresponding two rows being adjustable in accordance with the phase error to be compensated for, and that an electronic switch (demultiplexer) is provided between the amplifier and the image reproduction device.

4. Apparatus according to claim 3 for carrying out the process according to claim 2, characterized in that for the image reproduction device two rows of light-emitting diodes (6a—6n, 7a—7n), which are arranged separated from each other in space are provided in a position for image reproduction, and that optical means are provided for imaging and superimposing (4) said two rows of light-emitting diodes to form two adjacent rows (6a'—6d', 7a'—7d').

5. Apparatus according to claim 4, characterized in that for superimposing of said rows of light-emitting diodes, physical beam-splitting means are provided.

6. Apparatus according to claim 4, characterized in that for superimposing of said rows of light-emitting diodes, geometrical beam-splitting means are provided.

Fig.1

Szene

Optik → Scanner → Detektor → Verstärker mit Tiefpaßfilter → Demultiplexer → Bilddarstellung Zeile 1 → Optische Vereinigung

Demultiplexer → Bilddarstellung Zeile 2 → Optische Vereinigung

Fig.2

Szene

Optik → Scanner → Detektor → Verstärker mit Tiefpaßfilter → Demultiplexer → Bilddarstellung mit Zeilen 1und 2

0 003 600

1a

1b

**Fig.3**

1c

1n

**Fig.4**

Amplitude

Eingang ——————————→ x

Amplitude

Eingang ——————————→ x

$x_p$

$2x_p$

Fig.5

Fig.6b

$2x_p$

$2a'$

$3a'$

$2b'$

$3b'$

$2c'$

$3c'$

$2d'$

$3d'$

$20'$

$30'$

$2x_p$

$2a$

$3a$

$2b$

$3b$

$2c$

$3c$

$2d$

$3d$

Fig.6a

$20$

$30$

Fig.7

Fig.8